# EUROPÄISCHE PATENTSCHRIFT

(11) **EP 1 216 774 B1**
(45) Veröffentlichungstag und Bekanntmachung des Hinweises auf die Patenterteilung: **15.10.2003**
(21) Anmeldenummer: 01130131.4
(22) Anmeldetag: 19.12.2001
(51) Int. Cl.: B23B 31/117, B23B 31/14

(54) **Spannvorrichtung mit einem Spanndorn**
Clamping device with mandrel
Dispositif de préhension à mandrin

(30) Priorität: 21.12.2000 DE 10063859
(43) Veröffentlichungstag der Anmeldung: 26.06.2002
(73) Patentinhaber: C. Hilzinger-Thum Schleif- und Poliermittelwerk GmbH, 78532 Tuttlingen (DE)
(72) Erfinder: Krichhoff, Hans-Hermann, 78532 Tuttlingen/Nendingen (DE)
(74) Vertreter: Patentanwälte Westphal, Mussgnug & Partner

(56) Entgegenhaltungen:
- WO-A-95/09711
- US-A- 4 422 590
- US-A- 5 320 364

## Beschreibung

Die Erfindung betrifft eine Spannvorrichtung mit einem Spanndorn, auf den ein Werkzeug oder ein Werkstück spannbar ist.

Eine solche Spannvorrichtung gemäß Oberbegriff von Patentanspruch 1 ist z.B. aus US-A-4422590 bekannt.

Spannvorrichtungen werden zum Beispiel für Seitenwand-Kopfbürsten-Einheiten vorgesehen, die zum Polieren von Metallspülbekken oder Metallwaschbecken eingesetzt werden. Der Spanndorn, auf dem eine aufgesteckte Seitenwandbürste befestigt ist, wird von einer Spindel, z.B. einer elektrischen Handbohrmaschine angetrieben.

Der Spanndorn ist beispielsweise als Spreizdorn mit Spannzangen ausgeführt. Mittels eines Schlüssels werden nach Aufstekken der hohlzylinderförmigen Seitenwandbürste die Spannzangen gespannt, damit die Seitenwandbürste fest auf dem Spanndorn sitzt. Wegen des hohen Verschleisses beim Polieren sind die Seitenwandkopfbürsten häufig auszuwechseln. Beim Auswechseln einer Seitenwandbürste sind zuerst die Spannzangen mittels des Schlüssels zu lösen. Anschließend wird die abgenutzte Seitenwandbürste vom Spanndorn abgezogen und eine neue auf den Spanndorn gesteckt. Mittels des Schlüssels werden die Spannzangen wieder gespannt, damit sie der Seitenwandbürste einen festen Halt auf dem Spanndorn geben.

Von Nachteil ist, dass das Auswechseln einer Seitenwandbürste oder einer ähnlichen Bürste, wie z.b. einer sogenannten Bodenbürste, eine zeitaufwendige und mühevolle Handarbeit erfordert. Ein weiterer Nachteil liegt darin, dass durch das häufige Austauschen der Seitenwandbürsten der Verschleiß an den Spannzangen des Spanndorns groß ist und es sogar oft zum Bruch der Spannzangen kommt.

Es ist daher Aufgabe der Erfindung, eine Spannvorrichtung mit einem Spanndorn so zu gestalten, dass ein hohlzylinderförmiges Werkzeug schnell und mühelos ohne Zuhilfenahme eines Werkzeugs auf den Spanndorn steckbar sowie vom Spanndorn lösbar ist und trotzdem fest auf dem Spanndorn sitzt.

Die Erfindung löst diese Aufgabe mit den im Anspruch 1 angegebenen Merkmalen.

Die Erfindugn beruht also im wesentlichen darau, dass am Umfang des Spanndorns mindestens eine Nut umläuft, in der ein elastischer Ring mit schräg nach innen verlaufenden Schlitzen sitzt, so daß bei rotierendem Spanndorn die durch die Schlitze gebildeten Segmente in Folge der Fliehkraft nach außen gegen die Innenwand des hohlzylinderförmigen aufgesetzten Werkzeugs oder Werkstücks drücken und ihm so einen festen Halt geben.

Vorzugsweise ist am Umfang des Spanndorns mindestens eine umlaufende Nut eingearbeitet, in der ein elastischer Ring sitzt, der vorzugsweise aus Gummi oder einem Elastomer hergestellt ist. In diesen elastischen Ring sind schräg nach innen verlaufende Schlitze eingearbeitet, so dass flügelähnliche Segmente gebildet werden. Das hohlzylinderförmige Werkzeug, z.B. eine Seitenwandbürste oder eine Bodenbürste, wird auf den Spanndorn gesteckt. Wenn der Spanndorn von einem Antrieb, z.B. der Antriebsspindel eines Elektromotors oder einer elektrischen Bohrmaschine, in Rotation versetzt wird, dreht sich die Bürste wegen der kraftschlüssigen Verbindung mittels des elastischen Ringes mit. Durch die Rotation werden in Folge der Fliehkraft die flügelähnlichen Segmente des elastischen Ringes nach außen gespreizt, so daß sie mit steigender Drehzahl des Spanndorns mit größerer Kraft gegen die axial verlaufende Innenwand der hohlzylinderförmigen Bürste gedrückt werden. Dadurch wird die kraftschlüssige Verbindung zwischen dem Spanndorn und dem halbzylinderförmigen Werkzeug fester.

Wenn der elektrische Antrieb des Spanndorns ausgeschaltet wird und der Spanndorn zum Stillstand kommt, zieht sich der elastische Ring wegen der nun fehlenden Fliehkraft zusammen, wodurch die kraftschlüssige Verbindung zwischen der Bürste und dem Spanndorn gelockert wird, so dass die Bürste vom Spanndorn von Hand abgezogen und falls erforderlich eine neue Bürste aufgesteckt werden kann. Das lästige, umständliche und zeitraubende Lösen und Spannen von Spannzangen mittels eines Schlüssels von Hand entfällt bei der Erfindung vollständig.

Vorzugsweise sind auf dem Umfang des Spanndorns zwei umlaufende Nuten vorgesehen, in welchen je ein elastischer Ring eingebettet ist, der z.B. aus Gummi oder einem Elastomer besteht.

An der Stirnseite des Spanndorns, die nicht mit der Antriebsspindel verbunden ist, ist z.B. eine Scheibe mit einer auf ihr sitzenden Filzscheibe drehbar gelagert. Diese Maßnahme hat den Vorteil, dass beim Polieren eines Metallspülbeckens die Stirnseite der Bürste das Metallspülbecken weder zerkratzen noch beschädigen kann.

Die erfindungsgemäße Spannvorrichtung ist besonders gut für eine Winkelkopfpoliervorrichtung zum Polieren von Metallspülbecken geeignet.

Anhand der Figuren wird die Erfindung näher beschrieben und erläutert.

In der Zeichnung zeigen:
- Fig.1: einen Längsschnitt durch ein Ausführungsbeispiel der Erfindung
- Fig.2: einen Querschnitt durch das Ausführungsbeispiel und
- Fig.3: das elastische Band in Draufsicht.

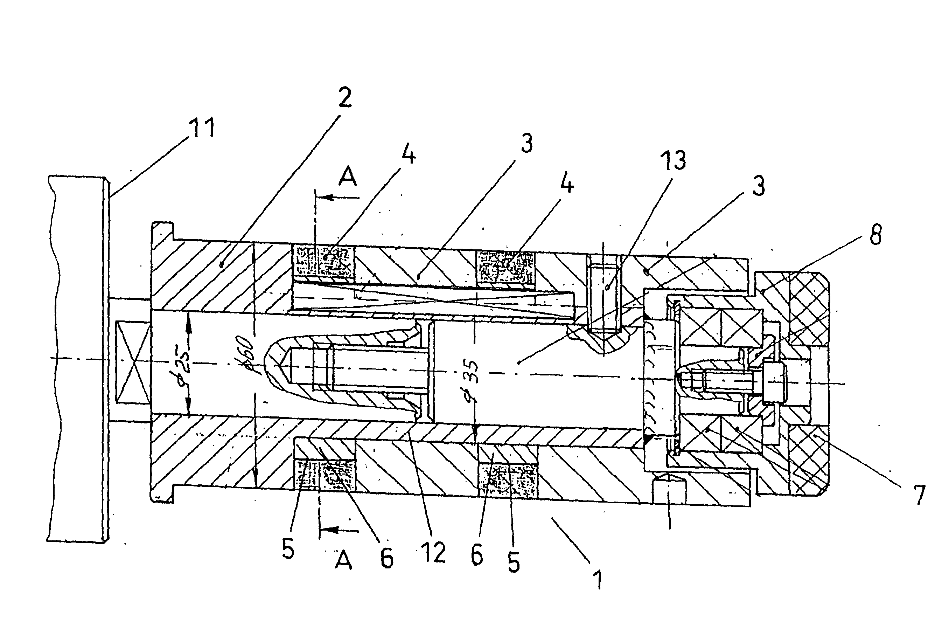

In Fig.1 ist ein Ausführungsbeispiel der Erfindung im Längsschnitt gezeigt.

Der Spanndorn 1 ist kraftschlüssig mit einer Antriebsspindel 11, z.B. eines Elektromotors oder einer Bohrmaschine, verbunden. Der Spanndorn 1 ist aus einem zylinderförmigen Grundkörper 2 mit einem Zapfen 12 aufgebaut, auf den ein hohlzylinderförmiges Steckteil 3 aufgesteckt und mittels mehrerer Schrauben 13 befestigt ist.

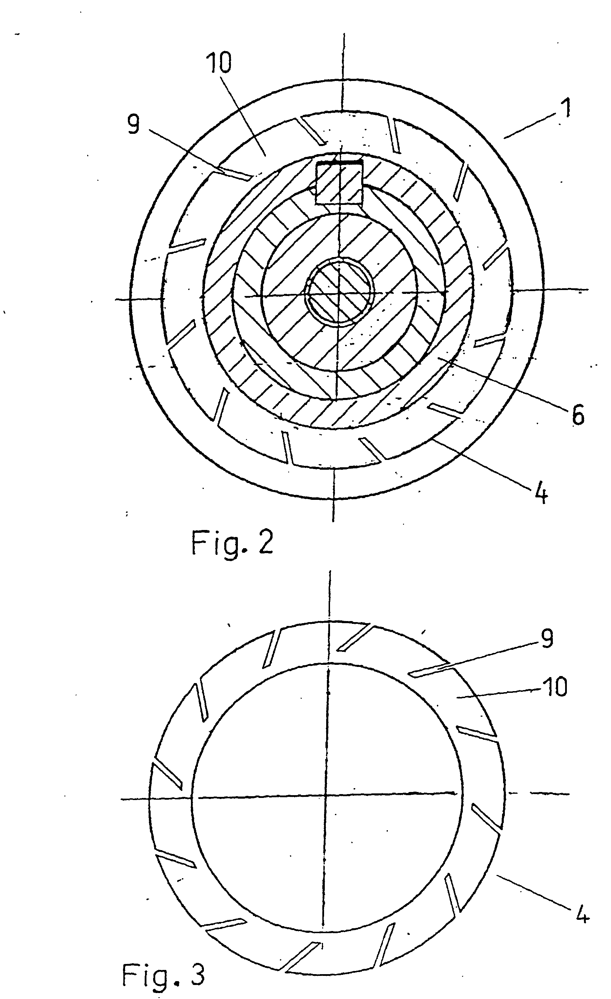

Der zylinderförmige Grundkörper 2 und das hohlzylinderförmige Aufsteckteil 3 sind so geformt, dass am Umfang des Spanndorns 1 im zusammengebauten Zustand zwei umlaufende Nuten 5 gebildet sind. In jeder Nut 5 sitzt ein elastischer Ring 4, der vorzugsweise aus Gummi hergestellt ist und einen geringen Betrag, beispielsweise 0,5 mm, aus der Nut 5 radial nach außen hervorsteht. In den elastischen Ring 4 sind schräg nach innen verlaufende Schlitze 9 eingearbeitet, die in den Figuren 2 und 3 sichtbar sind.

An der nicht mit der Antriebsspindel 11 verbundenen Stirnseite des Spanndorns 1 ist eine Scheibe 8 mit einer auf ihr sitzenden Filzscheibe 7 drehbar um die Längsachse des Spanndorns 1 gelagert. Auf den Spanndorn 1 ist ein hohlzylinderförmiges Werkzeug, z.B. die erwähnte Boden- oder Seitenwandbürste, zum Polieren von Metallspülbecken oder ein Werkstück steckbar.

Fig.2 zeigt einen Querschnitt durch das in Fig.1 im Längsschnitt abgebildete Ausführungsbeispiel.

Der elastische Ring 4 sitzt auf einem Ring 6. In den elastischen Ring 4, z.B. ein Gummiring, sind mehrere schräg verlaufende Schlitze 9 eingearbeitet, so dass zahlreiche flügelähnliche Segmente 10 gebildet werden. Die Schlitze 9 verlaufen nicht radial, sondern unter einem Winkel von etwa 45° zu den Radien.

In Fig.3 ist der elastische Ring 4 mit den Schlitzen 9 und den Segmenten 10 in Draufsicht gezeigt.

Bei Rotation des Spanndorns 1 werden die Segmente 10 in Folge der Fliehkraft radial nach außen gedrückt, weil sie in Folge der Fliehkraft sich in tangentialer Richtung lösen und wegfliegen möchten. Dadurch drücken die Segmente 10 gegen die axiale Innenwand des auf den Spanndorn 1 aufgesteckten hohlzylinderförmigen Werkzeugs, z.B. eine Seitenwand- oder Bodenbürste, die dadurch kraftschlüssig wie in einem Preßsitz mit dem Spanndorn 1 verbunden ist.

Mittels der rotierenden Bürste läßt sich nun ein Metallspülbecken polieren. Nach dem Ausschalten des Antriebs der Bürste sinkt die Drehzahl des Spanndorns auf Null ab; die Fliehkraft nimmt dabei ebenfalls auf den Wert Null ab. Wegen seiner Elastizität zieht sich der elastische Ring wieder zusammen, wodurch der Preßsitz gelockert wird, so dass, falls erforderlich, die Bürste mühelos und ohne Werkzeug von Hand vom Spanndorn gezogen werden kann. Ebenso leicht läßt sich eine andere Bürste auf den Spanndorn aufstecken.

Das Werkzeug ist daher mittels eines Preßsitzes auf dem Spanndorn befestigt, dessen Preßdruck mit steigender Drehzahl des Spanndorns zunimmt, dagegen bei Abnehmen der Drehzahl abnimmt, um schließlich bei Stillstand des Spanndorns auf den minimalen Wert zu sinken.

Die Erfindung ist allgemein zum Befestigen - oder mit anderen Worten ausgedrückt zum Einspannen - eines Werkzeuges oder eines Werkstücks an einem Spanndorn geeignet. Wie bereits erwähnt ist die erfindungsgemäße Spannvorrichtung besonders gut zum Einspannen einer Seitenwand- oder Bodenbürste auf einen Spanndorn geeignet.

### Bezugszeichenliste

- 1: Spanndorn
- 2: Zylinderförmiger Grundkörper
- 3: Hohlzylinderförmiges Steckteil
- 4: Elastischer Ring, Gummiring
- 5: Nut
- 6: Ring
- 7: Filzscheibe
- 8: Scheibe
- 9: Schlitz
- 10: Segment
- 11: Antriebsspindel
- 12: Zapfen
- 13: Schraube

## Patentansprüche

1. Spannvorrichtung mit einem Spanndorn (1), auf den ein hohlzylinderförmiges Werkzeug oder Werkstück spannbar ist,
**dadurch gekennzeichnet,dass**
am Umfang des Spanndorns (1) mindestens eine Nut (5) umläuft, in der ein elastischer Ring (4) mit schräg nach innen verlaufenden Schlitzen (9) sitzt, so dass bei rotierendem Spanndorn (1) die durch die Schlitze (9) gebildeten Segmente (10) in Folge der Fliehkraft nach außen gegen die axiale Innenwand des hohlzylinderförmigen aufgesetzten Werkzeugs oder Werkstücks drücken und ihm so einen festen Halt geben.

2. Spannvorrichtung nach Anspruch 1,
**dadurch gekennzeichnet, dass**
am Umfang des Spanndorns (1) zwei umlaufende Nuten (5) eingearbeitet sind, in denen je ein elastischer Ring (4) mit schräg nach innen verlaufenden Schlitzen (5) sitzt.

3. Spannvorrichtung nach Anspruch 1 oder 2,
**dadurch gekennzeichnet, dass**
der elastische Ring (4) einen vorgebbaren Betrag aus der Nut (5) übersteht.

4. Spannvorrichtung nach Anspruch 1, 2 oder 3,
**dadurch gekennzeichnet, dass**
die Schlitze (9) im elastischen Ring (4) in einem Winkel von etwa 45° zu den Radien angeordnet sind.

5. Spannvorrichtung nach einem der vorangehenden Ansprüche,
**dadurch gekennzeichnet, dass**
der elastische Ring (4) aus Gummi besteht.

6. Spannvorrichtung nach einem der vorangehenden Ansprüche,
**dadurch gekennzeichnet, dass**
der Spanndorn (1) zylinderförmig ausgeführt ist.

7. Spannvorrichtung nach Anspruch 6,
**dadurch gekennzeichnet, dass**
der Spanndorn (1) aus einem zylinderförmigen Grundkörper (2) mit einem Zapfen (12) besteht, auf den ein hohlzylinderförmiges Steckteil (3) gesteckt ist.

8. Spannvorrichtung nach Anspruch 7,
**dadurch gekennzeichnet, dass**
das hohlzylinderförmige Steckteil (3) mittels Schrauben (13) am zylinderförmigen Grundkörper (2) befestigt ist.

9. Spannvorrichtung nach einem der vorangehenden Ansprüche,
**dadurch gekennzeichnet, dass**
das auf den Spanndorn (1) aufsteckbare Werkzeug eine Seitenwandbürste oder eine Bodenbürste ist.

10. Spannvorrichtung nach einem der vorangehenden Ansprüche,
**dadurch gekennzeichnet, dass**
an der einen Stirnseite des Spanndorns (1) eine Scheibe (8) mit einer auf ihr sitzenden Filzscheibe (7) drehbar gelagert ist.

11. Spannvorrichtung nach einem der vorangehenden Ansprüche,
**dadurch gekennzeichnet, dass**
die andere Stirnseite des Spanndorns (1) kraftschlüssig mit einer Antriebsspindel (11) verbindbar ist.

## Claims

1. Clamping device comprising a clamping mandrel (1), onto which a hollow cylindrical tool or workpiece is clampable,
**characterized in that**
extending around the periphery of the clamping mandrel (1) is at least one groove (5), in which is seated an elastic ring (4) having slots (9) extending obliquely inwards so that, as the clamping mandrel (1) rotates, as a result of centrifugal force the segments (10) formed by the slots (9) are pressed outwards against the axial inner wall of the mounted hollow cylindrical tool or workpiece and hence hold the latter securely thereon.

2. Clamping device according to claim 1,
**characterized in that**
worked into the periphery of the clamping mandrel (1) are two circumferential grooves (5), in each of which is seated an elastic ring (4) having slots (9) extending obliquely inwards.

3. Clamping device according to claim 1 or 2,
**characterized in that**
the elastic ring (4) protrudes by a predeterminable amount from the groove (5).

4. Clamping device according to claim 1, 2 or 3,
**characterized in that**
the slots (9) in the elastic ring (4) are disposed at an angle of approximately 45° to the radii.

5. Clamping device according to one of the preceding claims,
**characterized in that**
the elastic ring (4) is made of rubber.

6. Clamping device according to one of the preceding claims,
**characterized in that**
the clamping mandrel (1) is of a cylindrical construction.

7. Clamping device according to claim 6,
**characterized in that**
the clamping mandrel (1) comprises a cylindrical basic body (2) having a journal (12), onto which a hollow cylindrical mounting part (3) is mounted.

8. Clamping device according to claim 7,
**characterized in that**
the hollow cylindrical mounting part (3) is fastened by means of screws (13) to the cylindrical basic body (2).

9. Clamping device according to one of the preceding claims,
**characterized in that**
the tool mountable onto the clamping mandrel (1) is a side-wall brush or a bottom brush.

10. Clamping device according to one of the preceding claims,
**characterized in that**
on the one end of the clamping mandrel (1) a disk (8) having a felt washer (7) seated thereon is rotatably supported.

11. Clamping device according to one of the preceding claims,
**characterized in that**
the other end of the clamping mandrel (1) is connectable non-positively to a drive spindle (11).

## Revendications

1. Dispositif de préhension équipé d'un mandrin (1) sur lequel un outil en forme de cylindre creux ou une pièce à usiner peut être saisi(e),
**caractérisé en ce qu'**
il y a autour du mandrin (1) au moins une rainure (5) dans laquelle est inséré un anneau élastique (4) avec des encoches (9) allant en diagonale vers l'intérieur, de telle sorte que, si le mandrin (1) tourne, les segments (10) formés par les encoches (9) appuient, en raison de la force centrifuge, vers l'extérieur, contre la paroi interne axiale de l'outil ou de la pièce à usiner fixé(e) en forme de cylindre creux et fournissent ainsi à l'outil ou à la pièce à usiner un maintien solide.

2. Dispositif de préhension selon la revendication 1,
**caractérisé en ce que**
deux rainures (5) sont insérées autour du mandrin (1), chacune comprenant un anneau élastique (4) avec des rainures (5) allant en diagonale vers l'intérieur.

3. Dispositif de préhension selon la revendication 1 ou 2,
**caractérisé en ce que**
l'anneau élastique (4) dépasse de la rainure (5), d'un montant prédéfini.

4. Dispositif de préhension selon la revendication 1, 2 ou 3,
**caractérisé en ce que**
les encoches (9) de l'anneau élastique (4) font un angle d'environ 45 ° par rapport aux rayons.

5. Dispositif de préhension selon l'une des revendications précédentes,
**caractérisé en ce que**
l'anneau élastique (4) est en caoutchouc.

6. Dispositif de préhension selon l'une des revendications précédentes,
**caractérisé en ce que**
le mandrin (1) est de forme cylindrique.

7. Dispositif de préhension selon la revendication 6,
**caractérisé en ce que**
le mandrin (1) est composé d'un corps de base (2) en forme de cylindre avec un tourillon (12) sur lequel est fixée une pièce enfichable (3) en forme de cylindre creux.

8. Dispositif de préhension selon la revendication 7,
**caractérisé en ce que**
la pièce enfichable (3) en forme de cylindre creux est fixée sur le corps de base (2) en forme de cylindre à l'aide de vis (13).

9. Dispositif de préhension selon l'une des revendications précédentes,
**caractérisé en ce que**
l'outil fixé sur le mandrin (1) est une brosse de paroi ou une brosse de fond..

10. Dispositif de préhension selon l'une des revendications précédentes,
**caractérisé en ce que**
sur l'une des surfaces d'attaque du mandrin (1), est placé de manière mobile un disque (8), équipé d'un disque de feutre (7).

11. Dispositif de préhension selon l'une des revendications précédentes,
**caractérisé en ce que**
l'autre surface d'attaque du mandrin (1) peut être reliée par adhérence à une broche d'entraînement (11).
